# DEMANDE DE BREVET EUROPEEN

(11) **EP 1 889 815 A1**
(43) Date de publication de la demande: **20.02.2008**
(21) Numéro de dépôt: 07003489.7
(22) Date de dépôt: 09.10.2001
(51) Int. Cl.: C02F 3/28, C02F 3/34, C02F 3/30, C02F 103/20

(54) **Procédé de traitement biologique d'effluent d'élevage et le dispositif pour la mise en oeuvre de ce procédé**

(30) Priorité: 09.10.2000 FR 0012890
(71) Demandeur: Biovitis, 15400 Saint-Etienne-de-Chomeil (FR)
(72) Inventeur: Laugero, Chantal, 64160 Morlas (FR); Tillier, Denis, 64000 Pau (FR)
(74) Mandataire: Tripoz, Inès

(57) **Abrégé**

La présente invention concerne un procédé de traitement biologique d'effluent d'élevage, caractérisé en ce qu'il comporte deux phases de traitement biologique, une première phase de traitement de l'effluent d'élevage par une flore anaérobie, et une seconde phase de traitement aérobie par des champignons filamenteux. L'invention concerne plus particulièrement un procédé de traitement biologique du lisier de porc. L'invention se rapporte également au dispositif pour la mise en oeuvre du procédé de traitement biologique d'effluent d'élevage.

## Description

La présente invention concerne le domaine de l'agriculture. L'invention se rapporte à un procédé de traitement biologique d'effluent d'élevage et plus particulièrement de lisier de porc, utilisant des champignons filamenteux ou mycéliums. L'invention concerne également le dispositif permettant la mise en oeuvre du procédé de traitement biologique d'effluent d'élevage.

La gestion agronomique des volumes d'effluent d'élevage et plus particulièrement de lisiers produits devient problématique. Dans les zones d'élevage intensif, l'impact environnemental, les surfaces nécessaires et l'odeur sont autant de facteurs limitant l'épandage du lisier brut à travers champs. Le lisier résultant des déjections animales (urines, fèces) et des eaux de nettoyage des porcheries, est un liquide chargé en matières en suspension et en éléments fertilisants tels que l'azote ammoniacal. Il contient du phosphore principalement sous forme de phosphate particulaire et du potassium sous forme ionique très soluble.

Les excédents de lisiers épandus entraînent une sur-fertilisation azotée des sols, la pollution des nappes phréatiques, l'eutrophisation des eaux de surface ainsi qu'une accumulation de métaux lourds tels que le cuivre ou le zinc. La réglementation des installations classées relative aux élevages et la directive nitrate impliquent une gestion différente du lisier qui reste respectueuse de l'environnement.

Or le principal moyen de prévenir les pollutions reste le traitement de l'effluent d'élevage de manière à limiter la charge polluante rejetée.

Le procédé selon l'invention est un traitement biologique d'effluent d'élevage utilisant des champignons filamenteux ou mycéliums. Ce procédé vise à :
- dégrader la Demande Chimique en Oxygène (DCO),
- dégrader les composés azotés,
- éliminer le phosphore et
- faire disparaître l'odeur.

Le procédé selon l'invention est également remarquable pour sa simplicité de mise en oeuvre et pour son adaptabilité à tout type d'élevage.

Le procédé de traitement biologique d'effluent d'élevage selon la présente invention comporte deux phases de traitement biologique, une première phase de traitement de l'effluent d'élevage par une flore anaérobie et une seconde phase de traitement aérobie par des champignons filamenteux. Le procédé selon l'invention est caractérisé en ce qu'il comprend les étapes suivantes:
a) le transfert de l'effluent d'élevage depuis son lieu de stockage dans une première installation de décantation et de traitement des matières décantées par une flore anaérobie,
b) le transfert de l'effluent obtenu à l'étape (a) vers une seconde installation de rétention et de traitement dudit effluent par des champignons filamenteux en présence d'oxygène,
c) l'évacuation de l'effluent obtenu après l'étape (b).

On entend par effluent d'élevage tout résidu biologique provenant d'un élevage. Cet effluent d'élevage peut correspondre à du lisier, du fumier ou de la fiente respectivement dans le cadre d'un élevage de porc, de bétail ou de volaille.

Le traitement de l'étape (b) du procédé selon l'invention consiste avantageusement à soumettre l'effluent à plusieurs traitements par des champignons filamenteux en présence d'oxygène. De préférence, le traitement de l'étape (b) dans la seconde installation consiste en la dégradation des composés azotés et l'élimination de la pollution carbonée restante après le traitement de l'étape (a), par des champignons filamenteux en présence d'oxygène.

De préférence, avant la mise en oeuvre du procédé selon l'invention, l'effluent d'élevage ne subit pas de traitement primaire tel qu'un dégrillage ou tamisage. De plus, le lieu de stockage à partir duquel est transféré l'effluent d'élevage à l'étape (a) du procédé peut notamment être la pré-fosse de l'élevage.

L'initiation du procédé selon l'invention consiste à soumettre un effluent d'élevage à un traitement par une flore anaérobie pendant 6 semaines avant de soumettre l'effluent issu de celui-ci au traitement par des champignons filamenteux en présence d'oxygène. Ainsi, durant cette période de 6 semaines, l'effluent d'élevage est envoyé dans la première installation de manière à la remplir progressivement. Aucun effluent ne sort de cette installation anaérobie durant ces 6 semaines. Cela constitue la montée en puissance de la phase anaérobie. Cette période est nécessaire pour obtenir de bons rendements épuratoires dès la mise en route du traitement complet (anaérobie et aérobie).

Après cette mise en route de 6 semaines, le traitement de l'effluent d'élevage par la flore anaérobie durant l'étape (a) du procédé selon l'invention se déroule pendant une durée de 3 à 6 jours et de préférence pendant environ 4 jours à une température comprise entre 25 et 30°C. L'installation dans laquelle s'effectue le traitement de l'effluent d'élevage par la flore anaérobie durant l'étape (a) du procédé est en général un bio-digesteur.

La flore anaérobie mise en oeuvre lors de l'étape (a) du procédé selon l'invention est constituée de la flore anaérobie présente dans l'effluent d'élevage avantageusement complémentée par une flore anaérobie stricte. De préférence, la flore anaérobie stricte mise en oeuvre lors de l'étape (a) du procédé selon l'invention appartient aux espèces suivantes : *Thiobacillus denitrificans, Fusobacterium, Peptococcus* et *Clostridium.*

L'étape (b) du procédé de traitement biologique de l'effluent d'élevage permet la dégradation des composés azotés et assure l'élimination de la pollution carbonée restante. Cette étape est réalisée en présence d'oxygène et de champignons filamenteux spécifiques. De préférence, les champignons filamenteux sont fixés sur un support au niveau d'une tour de traitement. En effet, après l'étape (a) du procédé, l'effluent est récupéré dans une cuve de rétention à proximité de la tour de traitement puis est transféré au sommet de celle-ci dans une rampe d'aspersion à l'aide d'une pompe dite " de recirculation ". La rampe d'aspersion distribue le liquide de façon homogène sur la totalité de la surface de la tour. Le liquide ruisselle alors sur le support où sont fixés les champignons filamenteux. Lors de ce ruissellement, le liquide est en contact avec les mycéliums assurant la dégradation des composés azotés et carbonés, et en contact avec l'air qui circule à l'intérieur de la tour permettant ainsi l'aération du liquide. L'effluent retombe dans le bas de la tour où se trouve un piquage de vidange pour le retour vers la cuve de rétention. La pompe de recirculation fonctionne en continu.

Ainsi, le traitement aérobie est effectuée dans la seconde installation ensemencée avec des spores de champignons filamenteux avant tout transfert d'un effluent dans ladite seconde installation. Avantageusement, l'ensemencement des champignons filamenteux dans la seconde installation est effectué au moins une semaine avant le transfert d'un effluent dans cette seconde installation. Après cette période, l'alimentation de la phase aérobie peut se faire quotidiennement. Le traitement de l'effluent par des champignons filamenteux en présence d'oxygène se déroule pendant une durée de 3 à 6 jours et de préférence pendant environ 4 jours à une température comprise entre 15 et 20°C. Cette température comprise entre 15 et 20°C correspond à la température dans la cuve de rétention.

L'étape (b) aérobie du procédé de traitement biologique de l'effluent d'élevage selon l'invention fait appel aux capacités enzymatiques de certaines espèces fongiques sauvages, sélectionnées *in vitro* pour leur potentiel de dénitrification et déphosphorylation, et leur aptitude à concentrer les principaux métaux lourds présents dans l'effluent. De préférence, les champignons filamenteux utilisés durant l'étape (b) du procédé selon l'invention sont choisis parmi ceux présentant un fort potentiel de dénitrification et déphosphorylation, et une bonne aptitude à concentrer les principaux métaux lourds. De façon avantageuse, lorsque l'effluent d'élevage est du lisier de porc, les champignons utilisés à l'étape (b) du procédé selon l'invention sont des champignons inférieurs ou des champignons appartenant à la famille des deutéromycètes ou un mélange de ceux-ci. Plus particulièrement, les champignons utilisés à l'étape (b) du procédé selon l'invention sont une (ou plusieurs) espèce(s) appartenant à un (ou plusieurs) genre(s) choisi(s) parmi *Rhizopus, Mucor* et *Scedosporium.* De plus, tout particulièrement, 10⁹ spores de chacune des espèces utilisées/ m³ d'effluent d'élevage traité sont utilisées pour ensemencer en champignons filamenteux la seconde installation de traitement. A titre d'exemple et de façon non exhaustive, on peut citer comme espèces appartenant aux genres *Rhizopus, Mucor,* et *Scedosporium,* et utilisables dans le cadre de l'invention, respectivement l'espèce *Rhizopus stolonifer,* l'espèce *Mucor racemosus* et l'espèce *Scedosporium apiospermum.*

Les temps de séjour préférés pour les deux phases anaérobie et aérobie correspondent à un résultat donné. Le temps de séjour de 4 jours dans chacune des phases correspond au meilleur compromis entre les rendements de dégradation souhaités et les coûts d'investissement de l'installation. Ces temps de séjour permettent l'obtention des résultats présentés dans le tableau I et permettent également l'élimination totale des odeurs nauséabondes dans l'effluent traité.

**Tableau I : Résultats obtenus pour un temps de séjour de 4 jours en phase aérobie et en phase anaérobie.**

| **Paramètres** | **Rendement de dégradation** |
|---|---|
| Demande Chimique en Oxygène(DCO) | 90 à 95 % |
| Phosphore total | 90 % |
| Azote global | 90 à 95 % |

A l'étape (c) du procédé de traitement biologique d'un effluent d'élevage selon l'invention, l'effluent obtenu à l'étape (b) peut aussi bien être transféré en vue d'un stockage que d'une utilisation pour irrigation.

L'invention concerne également le dispositif pour le traitement biologique d'effluent d'élevage, susceptible d'être mis en oeuvre dans le procédé selon l'invention. Le dispositif selon l'invention s'installe directement en sortie de l'élevage après la pré-fosse, cette dernière permettant la gestion des volumes à traiter. Le dispositif selon l'invention comprend :
i) une première installation de décantation de l'effluent d'élevage et de traitement des matières décantées par une flore anaérobie,
ii) une seconde installation de rétention et de traitement de l'effluent récupéré de la première installation par des champignons filamenteux en présence d'oxygène,
iii) un système d'approvisionnement de la première installation en effluent d'élevage,
iv) un système de transfert de l'effluent issu de la première installation dans la seconde installation,
v) un système d'évacuation de l'effluent issu de la seconde installation.

De façon avantageuse, la seconde installation du dispositif selon l'invention comprend au moins une cuve de rétention et au moins une tour de traitement par des champignons filamenteux en présence d'oxygène, la tour de traitement et la cuve de rétention communiquant d'une part par un système de recirculation et d'aspersion de l'effluent depuis la cuve de rétention dans la tour de traitement, et d'autre part par un système de vidange de l'effluent de la tour de traitement dans la même ou une autre cuve de rétention.

De préférence, selon le dispositif de l'invention, la première installation de décantation de l'effluent d'élevage et de traitement des matières décantées par une flore anaérobie est une fosse couverte enterrée. De plus, le système de transfert de l'effluent issu de la première installation dans la seconde installation selon le dispositif de l'invention est un poste de relevage.

Avantageusement, la première installation de décantation de l'effluent d'élevage et de traitement des matières décantées par une flore anaérobie est une fosse couverte enterrée répondant aux critères suivants :
- cylindrique ou parallélépipédique,
- étanche aux liquides,
- cloisonnée au 2 tiers par rapport au piquage d'alimentation sur 1,60 m de haut afin d'éviter d'entraîner des matières en suspension vers la sortie,
- équipée d'un piquage d'alimentation en PVC pression diamètre 75 mm PN 10, prolongé à l'intérieur d'un coude plongeant raccordé à un déflecteur permettant une meilleure répartition du flux entrant,
- équipée d'un piquage de sortie en PVC évacuation de diamètre 100 mm prolongé à l'intérieur d'un coude plongeant,
- équipée d'un ou deux regards de visite suivant la capacité de la fosse et
- équipée d'un évent en PVC diamètre 100 mm évitant toute surpression à l'intérieur de la cuve.
La fosse est enterrée afin de palier aux variations de température extérieure.

Selon le dispositif de l'invention, le système de transfert de l'effluent issu de la première installation dans la seconde installation est un poste de relevage équipé de deux pompes dont la mise en route et l'arrêt sont assurés par des flotteurs. Ainsi, ce système à 2 pompes assure le fonctionnement dudit poste de relevage même en cas de panne d'une des pompes. Avantageusement, selon le dispositif de l'invention, le système de transfert de l'effluent issu de la première installation dans la seconde installation est un poste de relevage équipé de deux pompes en sortie desquelles sont installés une vanne d'isolement et un clapet anti-retour en PVC pression PN 10 diamètre 75 mm.

De préférence, la cuve de rétention du dispositif selon l'invention répond aux critères suivants :
- réalisée en béton banché,
- semi-enterrée pour permettre un écoulement gravitaire entre la tour et cette cuve,
- cloisonnée au 2 tiers par rapport au piquage d'alimentation et
- équipée d'une clôture de 2 mètres de haut pour prévenir des accidents.

De façon avantageuse, la tour de traitement biologique du dispositif selon l'invention répond aux critères suivants :
- réalisée en matériau composite,
- circulaire (le diamètre et la hauteur sont fonctions du volume de garnissage)
- équipée de :
   - un châssis galvanisé,
   - 4 pattes d'ancrage,
   - un trou d'homme,
   - 2 pattes de levage,
   - 6 trous d'aération fonction du diamètre de la tour,
   - 6 support caillebotis supportant une charge fonction du volume de garnissage,
   - 1 caillebotis maille 30x30 pour avoir une surface de passage optimale,
   - 1 manchon PVC pression diamètre 63 mm pour raccordement du système d'aspersion,
   - 1 manchon PVC gravitaire pour vidange (diamètre fonction du débit de recirculation).

De plus, la tour de traitement biologique du dispositif selon l'invention est, tout particulièrement, fixée sur une dalle de répartition en béton armé à proximité de la cuve de rétention.

La tour de traitement biologique du dispositif selon l'invention présente avantageusement un garnissage dont les caractéristiques sont les suivantes :
- constitué d'un support permettant la fixation des champignons filamenteux et pouvant être réalisé en PVC traité par exemple en structure type nid d'abeille ou en polypropylène,
- présentant un taux de vide supérieur à 80% permettant une aération efficace du liquide et la percolation de l'effluent sans colmatage, et
- possédant une surface spécifique importante, supérieure à 150 m²/m³, assurant un développement maximal des champignons ainsi qu'une surface d'échange optimale.

Le système de recirculation/ aspersion de la tour de traitement, selon le dispositif de l'invention, est avantageusement constitué de :
- 2 pompes installées dans la cuve de rétention côté alimentation,
- une vanne d'isolement et un clapet anti-retour installés en sortie de chaque pompe,
- un système d'aspersion en PVC pression diamètre 63 mm, composé d'un réseau de tuyauteries relié à des buses de pulvérisation (nombre et taille fonction du diamètre de la tour).

Le système d'évacuation de l'effluent issu de la seconde installation selon le dispositif de l'invention est avantageusement constitué de 2 pompes immergées dans la cuve de rétention à l'opposé de l'alimentation. Quelle que soit la destination finale de l'effluent (stockage, irrigation), celui-ci est transféré à l'aide de ces 2 pompes.

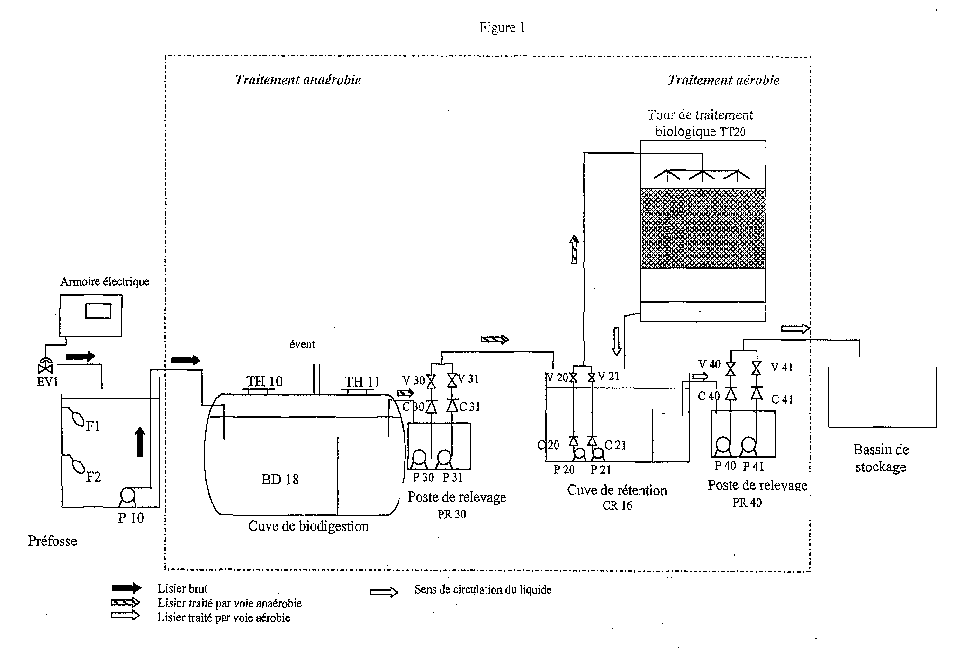

D'autres avantages et caractéristiques de 1'invention apparaîtront à la lecture de 1'exemple qui suit concernant un dispositif de traitement biologique du lisier selon l'invention d'une capacité de 1000 m³/an et dans lequel il sera fait référence à la figure 1 qui représente un schéma du dispositif de traitement biologique du lisier.

### Exemple d'une unité d'une capacité de 1000 m³/an.

Ce type de dispositif pour le traitement biologique du lisier correspond à un élevage de type engraisseur contenant 448 places. Le lisier est stocké dans une préfosse dont l'alimentation est contrôlé par une armoire électrique. Le lisier est envoyé de la préfosse vers la cuve de biodigestion grâce à une pompe (P 10).

### 1) Le poste anaérobie.

Ce poste est constitué de la fosse enterrée (BD 18) et du poste de relevage (PR 30).

### a) La fosse enterrée (BD 18).

La fosse possède les caractéristiques suivantes :
- forme cylindrique horizontale
- volume total = 18 m³
- volume utile = 16 m³
- diamètre = 2400 mm
- longueur = 4490 mm
- cloisonnement situé à 2780 mm du piquage d'alimentation d'une hauteur de 1600 mm
- équipée de 2 trous d'hommes (TH 10 et TH 11) d'un diamètre de 650 mm.
- équipée d'un évent de diamètre 100 mm, surmonté d'un chapeau, muni d'une moustiquaire. Cet évent est installé sur le premier trou d'homme.

### b) Le poste de relevage (PR 30).

Le poste de relevage possède les caractéristiques suivantes :
- volume total = 590 1
- volume utile = 450 1
- longueur = 1050 mm
- largeur = 835 mm
- hauteur = 670 mm
- équipé de deux pompes (P30 et P31) immergées triphasées d'une puissance de 0,55 kW chacune, 1,7 A, assurant un débit de 9 m³/h pour une Hauteur Manométrique Totale (HMT) de 5,5 m de colonne d'eau (CE).

Ce poste de relevage est enterré de manière à ce que l'effluent traité par voie anaérobie soit évacué par surverse de la fosse enterrée. Il est nécessaire d'équiper ce type de poste par des réhausses.

### 2) Le poste aérobie.

Ce poste est constitué de la cuve de rétention (CR 16), de la tour de traitement biologique (TT 20), de son système de recirculation/ aspersion et d'un système de relevage.

### a) La cuve de rétention (CR 16).

Cette cuve de rétention, réalisée en béton banché, possède les caractéristiques suivantes :
- forme rectangulaire
- volume total = 18,6 m³
- volume utile = 15 m³
- longueur = 3520 mm
- largeur = 2640 mm
- profondeur = 2000 mm
- cloisonnement situé à 2300 mm de l'alimentation d'une hauteur de 900 mm.

De plus, cette cuve est enterrée sur une hauteur de 1800 mm.

### b) La tour de traitement biologique (TT20).

Cette tour possède les caractéristiques suivantes :
- forme cylindrique verticale
- diamètre = 2400 mm
- hauteur hors toit = 5300 mm
- hauteur avec toit = 5562 mm
- volume disponible en bas de tour (sous les trous d'aération) = 2,4 m³
- équipée de 6 trous d'aération de dimensions 500x400 mm² représentant une surface d'ouverture de 1,2 m² soit 26% de la surface horizontale de la tour de traitement biologique,
- équipée d'un toit, couvrant la totalité de la surface horizontale de la tour de traitement, surélevé d'au moins 160 mm,
- volume de garnissage installé = 13 m³
- hauteur de garnissage = 2800 mm
- surface développée du garnissage = 2340 m²/m³
- équipée d'un piquage de vidange (diamètre 125 mm) relié à la cuve de rétention.

La tour de traitement biologique est installée sur une dalle de répartition réalisée à proximité de la cuve de rétention.

### c) Le système de recirculation/ aspersion.

Le système de recirculation et d'aspersion est composé des éléments suivants :
- 2 pompes immergées (P20 et P21) d'une puissance de 1,1 kW triphasées, 2,7 A, assurant un débit de 13,5 m³/h pour une HMT de 8,5 m de CE,
- un ensemble de tuyauterie (clapets anti-retour (C20 et C21), vannes (V20 et V21), conduite PVC Pression en diamètre 63)
- une rampe d'aspersion en PVC pression PN 10, réalisée en croix, équipée de buses de pulvérisation de type hélicoïdales à cône plein 120°.

Les vannes (V20 et V21) installées sur le circuit de recirculation servent à isoler une partie du circuit en cas de maintenance sur une pompe, ainsi qu'au réglage du débit.

### d) Le système de relevage (PR 40).

Ce système de relevage est installé dans la cuve de rétention (CR16). Il est composé des éléments suivants :
- 2 pompes immergées (P40 et P41) d'une puissance de 0,55 kW triphasées, 1,7 A, assurant un débit de 9 m³/h pour une HMT de 5,5 m de CE,
- un ensemble de tuyauterie (clapets anti-retour (C40 et C41), vannes (V40 et V41), conduite PVC pression en diamètre 75).

L'ensemble des pompes utilisées est commandé par des systèmes de contacteurs-flotteurs.

## Revendications

1. Procédé de traitement biologique d'effluent d'élevage, **caractérisé en ce qu'**il comporte deux phases de traitement biologique, une première phase de traitement de l'effluent d'élevage par une flore anaérobie, et une seconde phase de traitement aérobie par des champignons filamenteux.

2. Procédé selon la revendication 1, **caractérisé en ce qu'**il comprend les étapes suivantes :
a) le transfert de l'effluent d'élevage depuis son lieu de stockage dans une première installation de décantation et de traitement des matières décantées par une flore anaérobie,
b) le transfert de l'effluent obtenu à l'étape (a) vers une seconde installation de rétention et de traitement dudit effluent par des champignons filamenteux en présence d'oxygène,
c) l'évacuation de l'effluent obtenu après l'étape (b).

3. Procédé selon la revendication 2, **caractérisé en ce que** le traitement de l'étape (b) consiste à soumettre l'effluent à plusieurs traitements par des champignons filamenteux en présence d'oxygène.

4. Procédé selon la revendication 2, **caractérisé en ce que** le traitement de l'étape (b) dans la seconde installation consiste en la dégradation des composés azotés et l'élimination de la pollution carbonée restante après le traitement de l'étape (a), par des champignons filamenteux en présence d'oxygène.

5. Procédé selon l'une quelconque des revendications précédentes, **caractérisé en ce que** l'initiation dudit procédé consiste à soumettre un effluent d'élevage à un traitement par une flore anaérobie pendant 6 semaines avant de soumettre l'effluent issu de celui-ci au traitement par des champignons filamenteux en présence d'oxygène.

6. Procédé selon l'une quelconque des revendications précédentes, **caractérisé en ce que** le traitement d'effluent d'élevage par une flore anaérobie se déroule pendant une durée de 3 à 6 jours et de préférence pendant environ 4 jours à une température comprise entre 25 et 30°C.

7. Procédé selon l'une quelconque des revendications précédentes, **caractérisé en ce que** la flore anaérobie est constituée de la flore anaérobie présente dans l'effluent d'élevage avantageusement complémentée par une flore anaérobie stricte.

8. Procédé selon la revendication 7, **caractérisé en ce que** la flore anaérobie stricte appartient aux espèces suivantes : *Thiobacillus denitrificans, Fusobacterium, Peptococcus* et *Clostridium.*

9. Procédé selon l'une quelconque des revendications 2 à 8, **caractérisé en ce que** le traitement aérobie est effectuée dans la seconde installation ensemencée avec des spores de champignons filamenteux avant le transfert d'un effluent dans ladite seconde installation.

10. Procédé selon l'une quelconque des revendications 2 à 9, **caractérisé en ce que** l'ensemencement des champignons filamenteux dans la seconde installation est effectué au moins une semaine avant le transfert d'un effluent dans ladite seconde installation.

11. Procédé selon l'une quelconque des revendications précédentes, **caractérisé en ce que** le traitement de l'effluent par des champignons filamenteux en présence d'oxygène se déroule pendant une durée de 3 à 6 jours et de préférence pendant environ 4 jours à une température comprise entre 15 et 20°C.

12. Procédé selon l'une quelconque des revendications précédentes, **caractérisé en ce que** les champignons filamenteux sont choisis parmi ceux présentant un fort potentiel de dénitrification et déphosphorylation et une bonne aptitude à concentrer les principaux métaux lourds.

13. Procédé selon l'une quelconque des revendications précédentes, **caractérisé en ce que** l'effluent d'élevage est du lisier de porc.

14. Procédé selon l'une quelconque des revendications précédentes, **caractérisé en ce que** les champignons filamenteux sont des champignons inférieurs ou des champignons appartenant à la famille des deutéromycètes ou un mélange de ceux-ci.

15. Procédé selon l'une quelconque des revendications précédentes, **caractérisé en ce que** les champignons filamenteux sont une (ou plusieurs) espèce(s) appartenant à un (ou plusieurs) genre(s) choisi(s) parmi *Rhizopus, Mucor* et *Scedosporium.*

16. Procédé selon la revendication 15, **caractérisé en ce que**, par m³ d'effluent d'élevage traité, 10⁹ spores de chacune desdites espèces sont utilisées pour ensemencer en champignons filamenteux la seconde installation de traitement.

17. Dispositif pour le traitement biologique d'un effluent d'élevage, susceptible d'être mis en oeuvre dans un procédé selon l'une quelconque des revendications 1 à 15, **caractérisé en ce qu'**il comprend :
i) une première installation de décantation de l'effluent d'élevage et de traitement des matières décantées par une flore anaérobie,
ii) une seconde installation de rétention et de traitement de l'effluent récupéré de la première installation par des champignons filamenteux en présence d'oxygène,
iii) un système d'approvisionnement de la première installation en effluent d'élevage,
iv) un système de transfert de l'effluent issu de la première installation dans la seconde installation,
v) un système d'évacuation de l'effluent issu de la seconde installation.

18. Dispositif selon la revendication 17, **caractérisé en ce que** la seconde installation comprend au moins une cuve de rétention et au moins une tour de traitement par des champignons filamenteux en présence d'oxygène, la tour de traitement et la cuve de rétention communiquant d'une part par un système de recirculation et d'aspersion de l'effluent depuis la cuve de rétention dans la tour de traitement, et d'autre part par un système de vidange de l'effluent de la tour de traitement dans la même ou une autre cuve de rétention.

19. Dispositif selon l'une des revendications 17 ou 18, **caractérisée en ce que** la première installation de décantation de l'effluent d'élevage et de traitement des matières décantées par une flore anaérobie est une fosse couverte enterrée.

20. Dispositif selon l'une quelconque des revendications 17 à 19, **caractérisé en ce que** le système de transfert de l'effluent issu de la première installation dans la seconde installation est un poste de relevage.

21. Dispositif selon l'une quelconque des revendications 17 à 20, **caractérisé en ce que** la première installation de décantation de l'effluent d'élevage et de traitement des matières décantées par une flore anaérobie est une fosse couverte enterrée répondant aux critères suivants :
- cylindrique ou parallélépipédique,
- étanche aux liquides,
- cloisonnée au 2 tiers par rapport au piquage d'alimentation sur 1,60 m de haut afin d'éviter d'entraîner des matières en suspension vers la sortie,
- équipée d'un piquage d'alimentation en PVC pression diamètre 75 mm PN 10, prolongé à l'intérieur d'un coude plongeant raccordé à un déflecteur permettant une meilleure répartition du flux entrant,
- équipée d'un piquage de sortie en PVC évacuation de diamètre 100 mm prolongé à l'intérieur d'un coude plongeant,
- équipée d'un ou deux regards de visite suivant la capacité de la fosse et
- équipée d'un évent en PVC diamètre 100 mm évitant toute surpression à l'intérieur de la cuve. La fosse est enterrée afin de palier aux variations de température extérieure.

22. Dispositif selon l'une quelconque des revendications 17 à 21, **caractérisé en ce que** le système de transfert de l'effluent issu de la première installation dans la seconde installation est un poste de relevage équipé de deux pompes dont la mise en route et l'arrêt sont assurés par des flotteurs.

23. Dispositif selon l'une quelconque des revendications 17 à 22, **caractérisé en ce que** le système de transfert de l'effluent issu de la première installation dans la seconde installation est un poste de relevage équipé de deux pompes en sortie desquelles sont installés une vanne d'isolement et un clapet anti-retour en PVC pression PN 10 diamètre 75 mm.

24. Dispositif selon l'une quelconque des revendications 18 à 23, **caractérisé en ce que** la cuve de rétention répond aux critères suivants :
- réalisée en béton banché,
- semi-enterrée pour permettre un écoulement gravitaire entre la tour et cette cuve,
- cloisonnée au 2 tiers par rapport au piquage d'alimentation et
- équipée d'une clôture de 2 mètres de haut pour prévenir des accidents.

25. Dispositif selon l'une quelconque des revendications 18 à 24, **caractérisé en ce que** la tour de traitement biologique répond aux critères suivants :
- réalisée en matériau composite,
- circulaire de diamètre et hauteur fonctions du volume de garnissage,
- équipée de :
• un châssis galvanisé,
• 4 pattes d'ancrage,
• un trou d'homme,
• 2 pattes de levage,
• 6 trous d'aération fonction du diamètre de la tour,
• 6 support caillebotis supportant une charge fonction du volume de garnissage,
• 1 caillebotis maille 30x30 pour avoir une surface de passage optimale,
• 1 manchon PVC pression diamètre 63 mm pour raccordement du système d'aspersion,
• 1 manchon PVC gravitaire pour vidange de diamètre fonction du débit de recirculation.

26. Dispositif selon l'une quelconque des revendications 18 à 25, **caractérisé en ce que** la tour de traitement biologique est fixée sur une dalle de répartition en béton armé à proximité de la cuve de rétention.

27. Dispositif selon l'une quelconque des revendications 18 à 26, **caractérisé en ce que** la tour de traitement biologique présente un garnissage dont les caractéristiques sont les suivantes :
- constitué d'un support permettant la fixation des champignons filamenteux réalisé en PVC traité par exemple en structure type nid d'abeille ou en polypropylène,
- présentant un taux de vide supérieur à 80% et
- possédant une surface spécifique supérieure à 150 m²/m³.

28. Dispositif selon l'une quelconque des revendications 18 à 27, **caractérisé en ce que** le système de recirculation et d'aspersion est constitué de :
- 2 pompes installées dans la cuve de rétention côté alimentation,
- une vanne d'isolement et un clapet anti-retour installés en sortie de chaque pompe,
- un système d'aspersion en PVC pression diamètre 63 mm, composé d'un réseau de tuyauteries relié à des buses de pulvérisation (nombre et taille fonction du diamètre de la tour).

29. Dispositif selon l'une quelconque des revendications 17 à 28, **caractérisé en ce que** le système d'évacuation de l'effluent issu de la seconde installation est constitué de 2 pompes immergées dans la cuve de rétention à l'opposé de l'alimentation.
